# EUROPÄISCHE PATENTSCHRIFT

(11) **EP 1 142 042 B1**
(45) Veröffentlichungstag und Bekanntmachung des Hinweises auf die Patenterteilung: **27.07.2005**
(21) Anmeldenummer: 00960481.0
(22) Anmeldetag: 18.08.2000
(51) Int. Cl.: H01M 2/36

(54) **VORRICHTUNG ZUM ELEKTROLYTBEFÜLLEN DER ZELLEN EINES AKKUMULATORS**
DEVICE FOR FILLING AN ACCUMULATOR CELL WITH ELECTROLYTE
DISPOSITIF POUR REMPLIR D'ELECTROLYTE LES CELLULES D'UN ACCUMULATEUR

(30) Priorität: 10.09.1999 DE 29915950 U
(43) Veröffentlichungstag der Anmeldung: 10.10.2001
(73) Patentinhaber: CMW Automation GmbH, 65594 Runkel-Ennerich (DE)
(72) Erfinder: WIPPERFÜRTH, Walter, 65232 Taunusstein (DE); ROMPEL, Markus, 65551 Limburg-Lindenholzhausen (DE)
(74) Vertreter: Müller, Eckhard, Dr.
(86) Internationale Anmeldenummer: PCT/EP2000/008060
(87) Internationale Veröffentlichungsnummer: WO 2001/020694

(56) Entgegenhaltungen:
- DE-A- 19 854 434
- US-A- 3 556 175
- PATENT ABSTRACTS OF JAPAN vol. 012, no. 328 (E-654), 6. September 1988 (1988-09-06) & JP 63 091952 A (JAPAN STORAGE BATTERY CO LTD), 22. April 1988 (1988-04-22)

## Beschreibung

Die Erfindung betrifft eine Vorrichtung zum Elektrolytbefüllen wenigstens einer Zelle eines Akkumulators, mit einer Vakuumpumpe zum Evakuieren der Zelle des Akkumulators und mit einer Fülleinrichtung zum Einbringen des Elektrolyts in eine Einfüllöffnung einer Zelle und mit einem Rezipienten zur Aufnahme des gesamten Akkumulators, wobei der Rezipient über einen Anschluß mit der Vakuumpumpe verbunden ist, so daß der Akkumulator als Ganzes unter Vakuum gesetzt werden kann und die Fülleinrichtung wenigstens eine Zufuhrleitung für den Elektrolyt aufweist, die vakuumdicht in den Rezipienten hineingeführt ist.

Bei einer Reihe von Akkumulatoren ist eine Evakuierung der Zellen vor der Befüllung mit Elektrolyt erforderlich. Der Grund dafür ist, daß das Einfüllen des Elektrolyts, welcher beispielsweise auch in Gelform vorliegen kann, in einer vertretbar kurzen Zeitdauer durchgeführt werden muß. Weiterhin soll mit dem Evakuieren der Zellen vermieden werden, daß sich in den mit beispielsweise gelförmigem Elektrolyt befüllten Zellen Lufteinschlüsse bilden.

Bislang erfolgte das Evakuieren insbesondere mehrzelliger Akkumulatoren dadurch, daß jede Zelle des Akkumulators separat über die Einfüllbohrung mittels eines Vakuumstutzens evakuiert wurde und bei Erreichen des entsprechenden Vakuums das Einbringen des Elektrolyts in die Zelle über den gleichen Anschlußstutzen erfolgte. Nachteilig bei diesen bekannten Vorrichtungen ist, daß aufgrund des in den unterschiedlichen Zellen herrschenden Vakuums zu Verformungen des gesamten Akkumulators kommen kann. Diese Verformungen führen zu erheblichen Belastungen an dem Akkumulatorgehäuse, beispielsweise an dessen Schweißstellen, so daß das Akkumulatorgehäuse unter Umständen beschädigt oder sogar zerstört werden kann. Auch können aufgrund des Evakuierens von lediglich einzelnen Zellen des Akkumulators die Einsätze, beispielsweise die Bleiplatten, stark aneinandergepreßt oder - gedrückt werden, so daß mit dieser herkömmlichen Vorrichtung auch Beschädigungen des Separators nicht ausgeschlossen werden können. Ein wesentliches Problem besteht auch darin, daß es oftmals aufgrund der Deformation des gesamten Akkumulators nicht möglich ist, das erforderliche Volumen an Elektrolyt in die einzelnen Zellen einzubringen. Die bekannte Vorrichtung ist des weiteren mechanisch sehr aufwendig ausgebildet. Die Einfüllöffnung einer jeden Zelle ist einzeln abzudichten. Gleiches gilt für die Entlüftungsbohrungen.

Aus der US 4 061 163 A ist eine Vorrichtung mit den eingangs genannten Merkmalen bekannt. Die Vorrichtung weist einen Rezipienten auf, in dem ein oder mehrere Lithiumzellen zum Befüllen mit Elektrolyt angeordnet werden können. Dabei werden die Lithiumzellen mit ihrer einzigen Einfüllöffnung nach unten weisend auf einem Ständer innerhalb des Rezipienten positioniert. Anschließend wird der Rezipient evakuiert, um Wasser und Wasserdampf aus den Zellen zu entfernen. Sodann wird der Unterdruck verringert, so daß dieser oberhalb des Siedepunktes des einzufüllenden flüssigen Elektrolyts liegt. Danach wird der Rezipient mit Elektrolyt befüllt, wobei die Einlaßöffnungen der Lithiumzellen in den Elektrolyt eintauchen. Anschließend wird der Unterdruck in dem Rezipienten auf Atmosphärendruck und danach auf einen Überdruck erhöht, so daß der Elektrolyt durch die Einlaßöffnung in die Lithiumzelle eindringen kann. Nach Füllen wird die Einlaßöffnung hermetisch versiegelt, und die Lithiumzelle ist einsatzbereit.

Weiterhin ist aus der US 5 356 733 A eine Elektrolytbefüllvorrichtung bekannt. Dabei werden eine oder mehrere Zellen einer Batterie zunächst einem Unterdruck ausgesetzt, um anschließend mittels eines Elektrolyts befüllt zu werden. Das besondere dieser Vorrichtung liegt darin, daß unterhalb der Einfüllöffnung der Zelle eine Ablenkplatte vorgesehen ist, die verhindert, daß der Elektrolyt nicht unmittelbar auf die Akkumulatorplatten bzw. die dazwischen angeordneten Glasmattenseperatoren auftrifft. Hierdurch soll eine Schädigung der Zellen beim Einströmen des Elektrolyts weitestgehend vermieden werden. Dieser Druckschrift ist jedoch nicht zu entnehmen, daß der Akkumulator als Ganzes unter Vakuum gesetzt werden kann und hierzu insgesamt in einem Rezipienten angeordnet ist.

Die US 5 731 099 A oder DE 26 04 622 A1 offenbaren Vorrichtungen, mit denen jede Zelle des Akkumulators separat über die Einfüllbohrung mittels eines Anschlußsstutzens evakuiert wird und bei Erreichen des entsprechenden Vakuums das Einbringen des Elektrolyts in die Zelle über den gleichen Anschlußstutzen erfolgt.

Schließlich ist aus der DE 39 12 846 C1 ein Verfahren zum Befüllen elektrochemischer Zellen, insbesondere Hochleistungszellen, wie Lithiumzellen, mit einem Elektrolyt bekannt, wobei die Zelle zunächst evakuiert und dabei gleichzeitig auf Kurzschluß hin überprüft wird und bei Feststellen eines Kurzschlusses der weitere Befüllvorgang abgebrochen wird. Nach Erreichen des Endvakuums wird die Zelle anschließend mit dem Elektrolyt gefüllt und dabei gleichzeitig die an der Zelle anliegende elektrische Spannung überwacht, wobei bei Feststellen einer Spannungsabweichung der Füllvorgang abgebrochen wird.

Demgegenüber liegt der vorliegenden Erfindung die Aufgabe zugrunde, eine Vorrichtung der eingangs genannten Art dahingehend weiterzubilden, daß unter Vermeidung der vorgenannten Nachteile ein einfaches und rasches Evakuieren sowie Befüllen der Zellen des Akkumulators mit Elektrolyt ermöglicht ist.

Diese Aufgabe durch eine Vorrichtung gemäß den Merkmalen des Anspruchs 1 gelöst.

Die mit der erfindungsgemäßen Vorrichtung erzielbaren Vorteile bestehen darin, daß aufgrund des Anlegens des Vakuums an den gesamten Akkumulator dieser keinerlei Belastungen ausgesetzt ist und somit auch keine Deformationen am Akkumulatorgehäuse auftreten. Demzufolge steht der gesamte Raum der Zellen beziehungsweise Einfüllöffnungen zum Füllen mit Elektrolyt zur Verfügung. Der Füllvorgang kann somit schneller durchgeführt und die Füllmenge optimiert werden. Weiterhin läßt sich in dem Rezipienten auch ein höheres Vakuum als mit der herkömmlichen Vorrichtung erreichen, da der Rezipient äußerst vakuumdicht ausgeführt werden kann. Auch entfällt der hohe Aufwand für das Abdichten der Einfüllöffnungen für die einzelnen Zellen sowie der Entlüftungsbohrungen. Es ist lediglich dafür zu sorgen, daß der Rezipient selbst abgedichtet ist. Auch ist in erhöhtem Maß Lufteinschlüssen im Elektrolyt entgegengewirkt, da mit der erfindungsgemäßen Vorrichtung ein höheres Vakuum erreichbar ist. Hierdurch wird die Qualität des Akkumulators, insbesondere im Hinblick auf die Selbstentladung erheblich verbessert. Da bei der erfindungsgemäßen Vorrichtung der Anschluß der Vakuumpumpe nicht unmittelbar im Bereich der Zufuhrleitung für den Elektrolyt angeordnet ist, kann des weiteren ein ansonsten erforderlicher, der Vakuumpumpe vorgeschaltete Säureabscheider entfallen. Weiterhin wirkt das Gehäuse des Rezipienten als Spritzschutz für den Bediener, da der Akkumulator während des Füllvorganges hermetisch von dem Gehäuse des Rezipienten umfaßt ist.

Zum Erleichtern des Befüllvorganges weisen die Zufuhrleitungen von besonderem Vorteil endseitig jeweils einen Füllkopf mit einem Auslaßstutzen auf. Dabei greift der Auslaßstutzen mit Spiel in die Einfüllöffnungen der Zellen des Akkumulators ein, so daß die einzelnen Zellen bereits mit dem in der Füllposition befindlichen Füllkopf beziehungsweise Auslaßstutzen zunächst evakuiert und dann mit Elektrolyt befüllt werden können.

Nach einer ersten vorteilhaften Ausgestaltung der Erfindung kann der Rezipient vakuumdicht auf eine den Akkumulator tragende Bodenplatte abgesetzt werden. Durch diese Maßnahme wird eine konstruktiv einfache Dichtfläche zwischen Rezipienten und Bodenplatte geschaffen, so daß mit relativ einfachen Dichtmitteln ein hohes Vakuum innerhalb des Rezipienten aufrechterhalten werden kann.

Von besonderem Vorteil ist dem Rezipienten eine Hubvorrichtung zugeordnet, mittels welcher der Rezipient von der Bodenplatte angehoben beziehungsweise abgesenkt werden kann. Nach Beendigung des Füllvorganges wird der Akkumulator von der Bodenplatte entfernt und durch einen neuen, zu befüllenden Akkumulator ersetzt. Hierzu wird der Rezipient mittels der Hubvorrichtung zunächst angehoben und nach Austausch der Akkumulatoren wieder auf die Bodenplatte abgesenkt, welcher der Rezipient dann vakuumdicht anliegt.

Von Vorteil weist der Rezipient nach einer weiteren Ausgestaltung der Erfindung eine dem Akkumulator im wesentlichen angepaßte Form auf und ist im wesentlichen als quaderförmiges Gehäuse ausgebildet, welches nur geringfügig größer als der Akkumulator selbst ist. Hinsichtlich der Abmessungen ist lediglich dafür Sorge zu tragen, daß die Zufuhrleitungen für den Elektrolyt ausreichend Platz in dem Rezipienten haben. Diese Maßnahme, den Rezipienten hinsichtlich des Volumeninhaltes möglichst klein auszubilden, sorgt dafür, daß nicht unnötig viel Luft zur Erzeugung des Vakuums in den Zellen des Akkumulators abgepumpt werden muß, wodurch auch die Zeitdauer des Befüllvorganges weiter reduziert wird.

Von besonderem Vorteil sind die eine oder mehreren Zufuhrleitungen durch eine Gehäusewand des Rezipienten hin zu Einfüllöffnungen der Zellen des Akkumulators geführt.

Sofern der Akkumulator mehrere Zellen mit jeweils einer Einfüllöffnung aufweist, was bei den vorliegenden Akkumulatoren im allgemeinen der Fall ist, ist von besonderem Vorteil jeder Einfüllöffnung beziehungsweise Zelle eine Zufuhrleitung mit Füllkopf oder Auslaßstutzen zugeordnet.

Vorteilhafterweise sind die Zufuhrleitungen beziehungsweise die Füllköpfe im Gehäuse des Rezipienten, bevorzugt an Stangen oder dergleichen Haltemittel, befestigt. Dabei erfolgt die Anordnung der Zufuhrleitungen beziehungsweise Füllköpfe im Gehäuse des Rezipienten derart, daß bei einem Absenken des Rezipienten auf die Bodenplatte die Zufuhrleitungen beziehungsweise Füllköpfe in die Einfüllöffnungen der Zellen selbsttätig hineinfahren und bei auf der Bodenplatte aufsitzendem Rezipienten mit Spiel in den Einfüllöffnungen aufgenommen sind. Nach Beendigung des Absenkvorganges wird dann mittels der Vakuumpumpe ein Vakuum im Rezipienten und damit auch in den Zellen des Akkumulators erzeugt. Nach Erreichen eines vorgegebenen Vakuum-Grenzwertes wird der Elektrolyt über die Zufuhrleitungen und Füllköpfe die Zellen eingefüllt. Nach Beendigung des Füllvorganges wird der Rezipient belüftet und mittels der Hubvorrichtung von der Bodenplatte abgehoben, wobei die Zufuhrleitungen beziehungsweise Füllköpfe wiederum selbsttätig aus den Einfüllöffnungen entfernt werden. Nach Austausch des befüllten Akkumulators gegen einen noch unbefüllten Akkumulator wird der Rezipient wieder abgesenkt, wobei die Zufuhrleitungen beziehungsweise Füllköpfe wiederum selbsttätig in die Einfüllöffnungen der Zellen eintreten, um den Evakuierungs-und Füllvorgang erneut zu starten.

Insoweit bietet es sich an, daß die Füllköpfe korrespondierend zur Anordnung der Einfüllöffnungen des Akkumulators am Rezipienten beziehungsweise dessen Gehäuse angeordnet sind.

Weiterhin besteht die Möglichkeit, die Füllköpfe beziehungweise Zufuhrleitungen an den Haltemitteln beziehungsweise Stangen relativ zueinander verstellbar zu befestigen, so daß die Vorrichtung auch an unterschiedliche Bauformen von Akkumulatoren angepaßt werden kann, bei denen die Einfüllöffnungen beispielsweise in anderen Abständen angeordnet sind.

Schließlich ist nach einem anderen vorteilhaften Merkmal der Erfindung der Anschluß für die Vakuumeinrichtung randseitig des Rezipienten in einem Eckbereich entfernt der Einfüllöffnungen des Akkumulators beziehungsweise der Füllköpfe angeordnet. Aufgrund dieser Maßnahme ist der Anschluß für die Vakuumpumpe möglichst entfernt den Einfüllöffnungen beziehungsweise Füllköpfen angeordnet, so daß der Gefahr des Eintretens von Elektrolyt in den Anschluß für die Vakuumpumpe wirksam begegnet wird.

Weitere Vorteile, Anwendungsmöglichkeiten und Ausgestaltungen der Erfindung ergeben sich aus der nachfolgenden Beschreibung eines Ausführungsbeispieles.

Es zeigen:

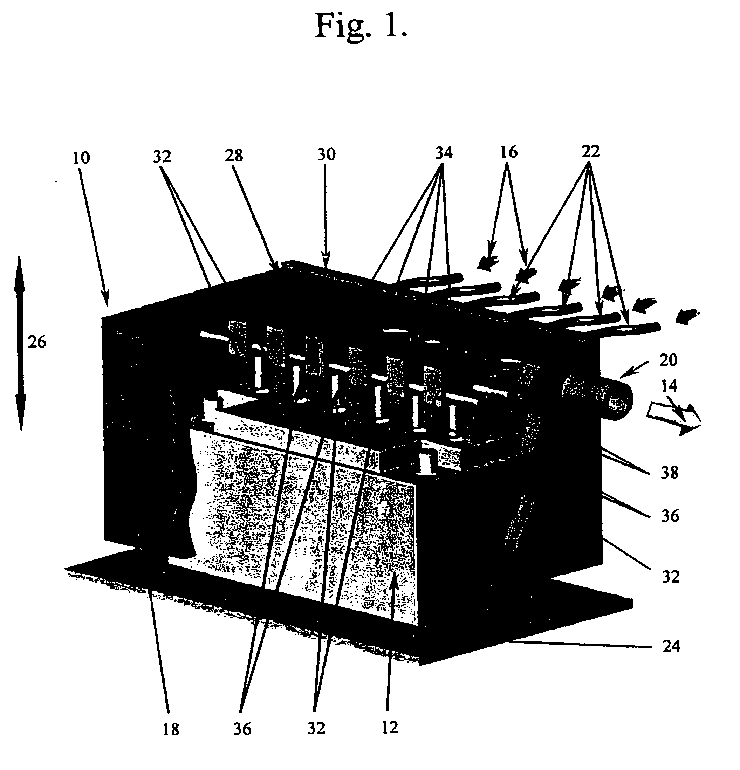

- Figur 1: ein Ausführungsbeispiel der erfindungsgemäßen Vorrichtung in perspektivischer Ansicht, mit teilweise weggebrochenem Rezipientengehäuse und in angehobener Stellung des Rezipienten und
- Figur 2: die Vorrichtung gemäß Figur 1, wobei der Rezipient auf die Bodenplatte abgesenkt ist.

In den Figuren ist eine Vorrichtung 10 zum Elektrolytbefüllen der Zellen eines Akkumulators 12 dargestellt. Zum Evakuieren der Zellen des Akkumulators 12 ist eine symbolisch mit der Bezugsziffer 14 bezeichnete Vakuumpumpe vorgesehen. Des weiteren weist die Vorrichtung 10 eine Fülleinrichtung 16 zum Einbringen des Elektrolyts in die Zellen des Akkumulators 12 auf.

Der Akkumulator 12 ist völlig in einem Rezipienten 18 aufgenommen, wobei der Rezipient 18 über einen Anschluß 20 mit der Vakuumpumpe 14 verbunden ist. Hierdurch ist es möglich, daß der Akkumulator 12 als Ganzes unter Vakuum gesetzt werden kann. Die Fülleinrichtung 16 weist wenigstens eine, bevorzugt mehrere Zufuhrleitungen 22 für den Elektrolyt auf, wobei die Zufuhrleitungen 22 vakuumdicht in den Rezipienten 18 hineingeführt sind.

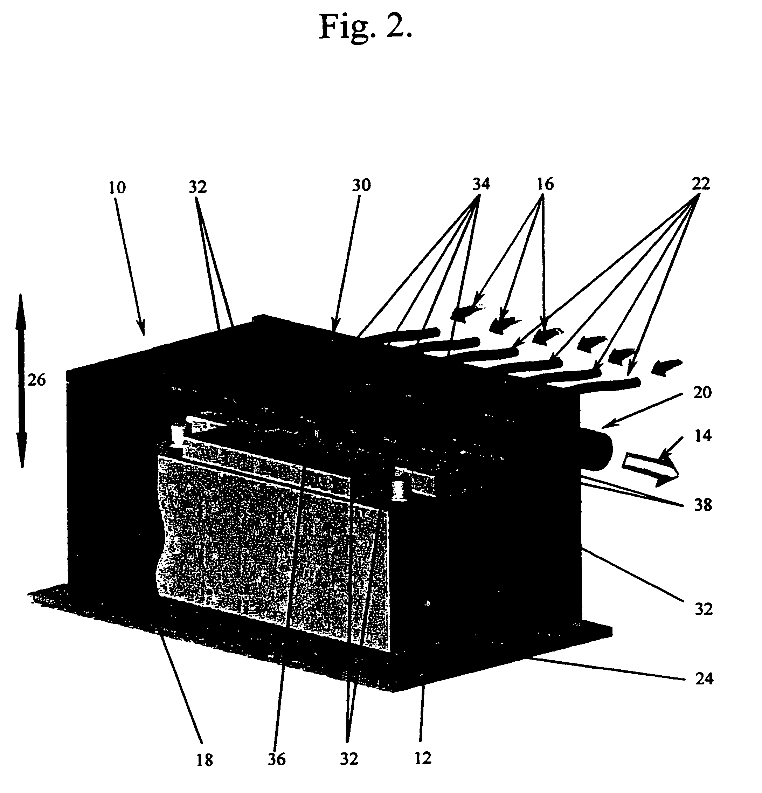

Wie insbesondere Figur 2 zu entnehmen, kann der Rezipient 18 vakuumdicht auf eine den Akkumulator 12 tragende Bodenplatte 24 abgesetzt werden. Weiterhin ist dem Rezipienten 18 eine Hubvorrichtung 26, welche symbolisch durch Pfeile dargestellt ist, zugeordnet, mit der der Rezipient 18 angehoben oder abgesenkt wird. Dabei weist der Rezipient 18 eine dem Akkumulator 12 im wesentlichen angepaßte Form auf und ist insgesamt als im wesentlichen quaderförmiges, nach unten offenes Gehäuse 28 ausgebildet, das in der abgesenkten Stellung gemäß Figur 2 durch die Bodenplatte 24 abgedichtet wird. Die Zufuhrleitungen 22 sind durch eine Gehäusewand 30 des Rezipienten 18 hin zu Einfüllöffnungen 32 der Zellen des Akkumulators 12 geführt. Die Zufuhrleitungen 22 besitzen endseitig jeweils einen Füllkopf 34 mit einem Auslaßstutzen 36. Der Auslaßstutzen 36 ist in der abgesenkten Stellung des Rezipienten 18 mit Spiel in der Einfüllöffnung 32 aufgenommen.

Von besonderem Vorteil sind die Zufuhrleitungen 22 beziehungsweise die Füllköpfe 34 im beziehungsweise am Gehäuse 28 des Rezipienten 18, bevorzugt an Stangen 38 oder dergleichen Haltemittel, befestigt. Dabei korrespondiert die Positionierung der Füllköpfe 34 mit der Anordnung der Einfüllöffnungen 32 des Akkumulators. Weiterhin sind die Füllköpfe 34 an den Haltemitteln beziehungsweise Stangen 38 relativ zueinander verstellbar befestigt, so daß die Position der Füllköpfe 34 individuellen Akkumulatorbauformen angepaßt werden kann.

Der Anschluß 20 für die Vakuumpumpe 14 ist randseitig des Rezipienten 18 in einem Eckbereich entfernt der Einfüllöffnungen 32 angeordnet.

### Bezugszeichen

- 10 -: Vorrichtung
- 12 -: Akkumulator
- 14 -: Vakuumpumpe
- 16 -: Fülleinrichtung
- 18 -: Rezipient
- 20 -: Anschluß
- 22 -: Zufuhrleitung
- 24 -: Bodenplatte
- 26 -: Hubvorrichtung
- 28 -: Gehäuse
- 30 -: Gehäusewand
- 32 -: Einfüllöffnung
- 34 -: Füllkopf
- 36 -: Auslaßstutzen
- 38 -: Stange

## Patentansprüche

1. Vorrichtung (10) zum Elektrolytbefüllen wenigstens einer Zelle eines Akkumulators (12), mit einer Vakuumpumpe (14) zum Evakuieren der Zelle des Akkumulators (12) und mit einer Fülleinrichtung (16) zum Einbringen des Elektrolyts in eine Einfüllöffnung (32) einer Zelle und mit einem Rezipienten (18) zur Aufnahme des gesamten Akkumulators (12), wobei der Rezipient (18) über einen Anschluß (20) mit der Vakuumpumpe (14) verbunden ist, so daß der Akkumulator (12) als Ganzes unter Vakuum gesetzt werden kann und die Fülleinrichtung (16) wenigstens eine Zufuhrleitung (22) für den Elektrolyt aufweist, die vakuumdicht in den Rezipienten (18) hineingeführt ist, **dadurch gekennzeichnet, daß** die Zufuhrleitung (22) endseitig jeweils einen Füllkopf (34) mit einem Auslaßstutzen (36) aufweist und der Auslaßstutzen (36) mit Spiel in die Einfüllöffnung (32) einer Zelle greift, so dass die einzelnen Zellen bereits mit dem in der Füllposition befindlichen Füllkopf beziehungsweise Auslaßstutzen zunächst evakuiert und dann mit Elektrolyt befüllt werden können.

2. Vorrichtung nach Anspruch 1, **dadurch gekennzeichnet, daß** der Rezipient (18) vakuumdicht auf eine den Akkumulator (12) tragende Bodenplatte (24) abgesetzt werden kann.

3. Vorrichtung nach Anspruch 1 oder 2, **dadurch gekennzeichnet, daß** der Rezipient (18) mittels einer zugeordneten Hubvorrichtung(26) angehoben und abgesenkt wird.

4. Vorrichtung nach einem der vorhergehenden Ansprüche, **dadurch gekennzeichnet, daß** Rezipient (18) einer dem Akkumulator (12) im wesentlichen angepaßte Form aufweist und im wesentlichen als quaderförmiges, insbesondere nach unten geöffnetes Gehäuse (28) ausgebildet ist.

5. Vorrichtung nach einem der vorhergehenden Ansprüche, **dadurch gekennzeichnet, daß** die eine oder mehrere Zufuhrleitungen (22) durch eine Gehäusewand (30) des Rezipienten (18) hin zu Einfüllöffnung (32) einer Zellen des Akkumulators (12) geführt sind.

6. Vorrichtung nach einem der vorhergehenden Ansprüche, **dadurch gekennzeichnet, daß** der Akkumulator (12) mehrere Zellen mit jeweils einer Einfüllöffnung (32) aufweist, wobei jeder Einfüllöffnung (32) eine Zufuhrleitung (22) mit Füllkopf (34) und Auslaßstutzen (36) zugeordnet ist.

7. Vorrichtung nach einem der vorhergehenden Ansprüche, **dadurch gekennzeichnet, daß** die Zufuhrleitungen (22) beziehungsweise die Füllköpfe (34) im Gehäuse (28) des Rezipienten (18), bevorzugt an Stangen (38) oder dergleichen Haltemitteln, befestigt sind.

8. Vorrichtung nach einem der vorhergehenden Ansprüche, **dadurch gekennzeichnet, daß** die Füllköpfe (34) korrespondierend zur Anordnung der Einfüllöffnungen (32) des Akkumulators (12) am beziehungsweise im Rezipienten (18) befestigt sind.

9. Vorrichtung nach einem der vorhergehenden Ansprüche, **dadurch gekennzeichnet, daß** die Füllköpfe (34) beziehungweise Zufuhrleitungen (22) an den Haltemitteln beziehungsweise Stangen (38) relativ zueinander verstellbar befestigt sind.

10. Vorrichtung nach einem der vorhergehenden Ansprüche, **dadurch gekennzeichnet, daß** der Anschluß für die Vakuumeinrichtung randseitig des Rezipienten (18) in einem Eckbereich entfernt der Einfüllöffnungen (32) angeordnet ist.

## Claims

1. Device (10) for filling at least one cell of a battery (12) with electrolyte, comprising a vacuum pump (14) for evacuating the cell of the battery (12) and a filling device (16) for introducing the electrolyte into a filling opening (32) of a cell and a receptacle (18) for receiving the entire battery (12), wherein the receptacle (18) is connected by way of a connection (20) with the vacuum pump (14) so that the battery (12) as a whole can be placed under vacuum and the filling device (16) has at least one feed line (22) for the electrolyte, which is vacuum-tightly led into the receptacle (18), **characterised in that** the feed line (22) has at the end a respective filling head (34) with an outlet stub pipe (36) and the outlet stub pipe (36) engages into the filling opening (32) of a cell with play so that the individual cells already with the filling head or outlet stub pipe disposed in the filling position can initially be evacuated and then filled with electrolyte.

2. Device according to claim 1, **characterised in that** the receptacle (18) can be vacuum-tightly placed on a base plate (24) supporting the battery (12).

3. Device according to claim 1 or 2, **characterised in that** the receptacle (18) is raised and lowered by means of an associated lifting device (26).

4. Device according to one of the preceding claims, **characterised in that** the receptacle (18) has a shape substantially matched to the battery (12) and is constructed substantially as a block-shaped, particularly downwardly open, housing (28).

5. Device according to one of the preceding claims, **characterised in that** the one or more feed lines (22) are led through a housing wall (30) of the receptacle (18) to the filling opening (32) of a cell of the battery (12).

6. Device according to one of the preceding claims, **characterised in that** the battery (12) has several cells each with a respective filling opening (32), wherein a feed line (22) with filling head (34) and outlet stub pipe (36) is associated with each filling opening.

7. Device according to one of the preceding claims, **characterised in that** the feed lines (22) or filling heads (34) are fastened in the housing (28) of the receptacle (18), preferably at rods (38) or like holding means.

8. Device according to one of the preceding claims, **characterised in that** the filling heads (34) are fastened at or in the receptacle (18) in correspondence with the arrangement of the filling openings (32) of the battery (12).

9. Device according to one of the preceding claims, **characterised in that** the filling heads (34) or feed lines (22) are fastened to the holding means or rods (38) to be adjustable relative to one another.

10. Device according to one of the preceding claims, **characterised in that** the connection for the vacuum device is arranged at the edge of the receptacle (18) in a corner region remote from the filling openings (32).

## Revendications

1. Dispositif (10) pour remplir d'électrolyte au moins une cellule d'un accumulateur (12), comprenant une pompe à vide (14) pour décharger la cellule de l'accumulateur (12) et un dispositif de remplissage (16) pour introduire l'électrolyte dans une ouverture de remplissage (32) d'une cellule, et un réceptacle (18) pour recevoir l'accumulateur entier (12), dans lequel le réceptacle (18) est relié par un raccordement (20) à la pompe à vide (14) de sorte que l'accumulateur (12) puisse être placé sous vide dans son ensemble et le dispositif de remplissage (16) présente au moins une conduite d'alimentation (22) pour l'électrolyte, qui est introduite dans le réceptacle (18) de manière étanche au vide, **caractérisé en ce que** la conduite d'alimentation (22) présente, en position terminale, respectivement, une tête de remplissage (34) avec une tubulure de décharge (36) et **en ce que** la tubulure de décharge (36) s'engage avec un certain jeu dans l'ouverture de remplissage (32) d'une cellule, de sorte que les cellules individuelles peuvent être d'abord déchargées avec la tête de remplissage ou la tubulure de décharge déjà en position de remplissage et, ensuite, remplies d'électrolyte.

2. Dispositif selon la revendication 1, **caractérisé en ce que** le réceptacle (18) peut, de manière étanche au vide, être déposé sur une plaque de base (24) supportant l'accumulateur (12).

3. Dispositif selon la revendication 1 ou 2,
**caractérisé en ce que** le réceptacle (18) est soulevé et abaissé au moyen d'un dispositif de levage correspondant (26).

4. Dispositif selon l'une quelconque des revendications précédentes, **caractérisé en ce que** le réceptacle (18) présente une forme sensiblement adaptée à l'accumulateur (12) et se présente sous la forme d'un boîtier (28) sensiblement parallélépipédique, en particulier ouvert vers le bas.

5. Dispositif selon l'une quelconque des revendications précédentes, **caractérisé en ce qu'**on achemine la ou les conduites d'alimentation (22) à travers une paroi (30) du boîtier du réceptacle (18) jusqu'à l'ouverture de remplissage (32) d'une cellule de l'accumulateur (12).

6. Dispositif selon l'une quelconque des revendications précédentes, **caractérisé en ce que** l'accumulateur (12) présente plusieurs cellules chacune avec une ouverture de remplissage (32), une conduite d'alimentation (22) avec une tête de remplissage (34) et une tubulure de décharge (36) étant affectée à chaque ouverture de remplissage (32).

7. Dispositif selon l'une quelconque des revendications précédentes, **caractérisé en ce que** les conduites d'alimentation (22) ou les têtes de remplissage (34) sont fixées dans le boîtier (28) du réceptacle (18), de préférence sur des barres (38) ou des moyens de support similaires.

8. Dispositif selon l'une quelconque des revendications précédentes, **caractérisé en ce que** les têtes de remplissage (34) correspondant à la disposition des ouvertures de remplissage (32) de l'accumulateur (12) sont fixées sur ou dans le réceptacle (18).

9. Dispositif selon l'une quelconque des revendications précédentes, **caractérisé en ce que** les têtes de remplissage (34) ou les conduites d'alimentation (22) sont fixées aux moyens de support ou aux barres (38) de manière à pouvoir être déplacées les unes par rapport aux autres.

10. Dispositif selon l'une quelconque des revendications précédentes, **caractérisé en ce que** le raccordement pour le dispositif à vide est disposé sur le bord du réceptacle (18) dans une zone de coin distante des ouvertures de remplissage (32).
